Europäisches Patentamt

European Patent Office

Office européen des brevets

(11) Veröffentlichungsnummer: **0 086 242**
**A1**

(12) # EUROPÄISCHE PATENTANMELDUNG

(21) Anmeldenummer: **82101041.0**

(22) Anmeldetag: **12.02.82**

(51) Int. Cl.³: **C 03 B 9/06**, B 44 C 1/16

(43) Veröffentlichungstag der Anmeldung: **24.08.83**
**Patentblatt 83/34**

(84) Benannte Vertragsstaaten: **AT BE CH DE FR GB IT LI NL SE**

(71) Anmelder: **Rosenthal Aktiengesellschaft, Wittelsbacherstrasse 42 Postfach 1520, D-8672 Selb/Bayern (DE)**

(72) Erfinder: **Boehm, Michael, Bei der Linde 42, D-8672 Selb/Bayern (DE)**

(54) **Verfahren zum Herstellen eines Farbdekores in einem Glas.**

(57) Herstellen eines Farbdekors in einem Glas, indem zuerst auf ein Grundglas, am besten auf einem zylindrischen Glaskülbel ein Farbdruck, insbesondere ein Schiebedruckbild, kalt aufgebracht wird und nach der Wiedererwärmung auf 500 bis 580 °C mit einer zweiten Glasschicht als Mantelglas überstochen wird, wobei anschließend das so dekorierte Hohlglas frei oder in einer weiteren Form ausgeblasen wird. Eine Verfahrensvariante besteht darin, daß perlenschnurartig angeordnete Luftbläschen in der Zwischenschicht erzeugt werden, indem eine gasbildende Komponente im Schiebedruckbild nur zum Teil vor dem Überstechen entfernt wird. Ferner kann einer der beiden Glasschichten ein Farbglas sein. Damit lassen sich eine Reihe von effektvollen Glasdekorationen erzielen.

0086242

## Verfahren zum Herstellen eines Farbdekores in einem Glas

Die Erfindung betrifft ein Verfahren zum Herstellen eines Farbdekores in einem Glas, insbesondere von Hohlglasgegenständen, die aus Kristall- oder Bleiglas bestehen.

Normalerweise erfolgt bei Hohlglasgegenständen die Dekoration in der Weise, daß Abziehbilder auf die äußere Oberfläche aufgetragen oder eine Bemalung vorgenommen wird, wobei anschließend der Farbkörper auf das Glas eingebrannt wird. Insbesondere legt man auch Wert auf eine künstlerische Dekoration, um die Glasgegenstände attraktiver zu machen. Derartige Dekorationen sind aber dem mechanischen Abrieb und dem chemischen Angriff ausgesetzt. Zwar sind auch andere Dekorationen bekannt, so aus der US-PS 4,017,318 und der DE-OS 28 33 081, wo photosensitives Glas durch Behandlung mit Strahlen und Wärme in einem breiten Farbspektrum integral eingefärbt wird; dabei können auch dekorative Muster und mehrfarbige photographische Bilder entwickelt werden, aber man erhält keineswegs solche Dekore, wie man sie von dekorativen Geschirrteilen kennt.

Aus der DE-AS 1 129 663 geht ferner ein Verfahren zum Herstellen von Hohlgläsern mit farbigem Innenüberfang von vorbestimmten Mustern hervor. Im einzelnen wird an der Glasmacherpfeife oder Düse angeheftetes Glasrohr von gewünschter Farbenkombination am abgewendeten Ende eingeschnürt, mit Glas überstochen und in einer Endform fertiggeblasen. Das vorgeformte Zwischenerzeugnis kann mit einem farbigen Element in Streifen und Mänteln versehen, überstochen und fertiggeblasen werden. Diese Technik verwendet transparente oder opake Gläser und erzielt neue Farbwirkungen, insbesondere durch Überlagerung der Farbringe oder Streifen. Solchermaßen dekorierte Gläser weisen aber den Nachteil auf, daß sehr feine Linien nur schlecht erhalten werden können und großflächige Dekore zu teuer werden.

Aus den böhmischen Glashütten kennt man ferner sogenannte Zwischengoldgläser. Ein solches Glas wird näher in der Literaturstelle von Phoebe Philips: The Encyclopedia of Glass, Verlag William Heinemann Ltd., London 1981, Seite 269 - 270, beschrieben, indem Goldplättchen zwischen zwei Schichten aus Glas gelegt werden. Ein solches Glas ist aber nie farbig verziert worden.

Ziel der vorliegenden Erfindung ist es, ein farbiges kompliziertes Dekor so aufzubringen, daß es gegen Angriff von Chemikalien bzw. gegen Abrieb beständig ist und gleichzeitig einfach herstellbar ist als auch neue ästhetische Effekte damit erhalten werden.

Die Aufgabe der vorliegenden Erfindung ist darin zu sehen, ein neues Verfahren zur Herstellung von geschützten Dekoroberflächen mit sehr variablen Mustern und besonderen Farb- und Formgebungseffekten zu schaffen.

Gelöst wird diese Aufgabe erfindungsgemäß dadurch, daß zunächst in einer Vorform ein Grundglas, am besten ein zylinderförmiger Glaskülbel, geblasen wird, auf dem nach dem Abkühlen auf Raumtemperatur ein Farbdruck mit mehrfarbigen komplizierten Motiven aufgebracht wird und das nach Erwärmung auf 500 bis 580 °C mit einer zweiten Glasschicht als Mantelglas überstochen wird, wobei anschließend das so dekorierte Hohlglas frei oder in einer weiteren Form ausgeblasen wird. Als besonders geeignet zum Aufbringen eines Farbdruckes auf die erfindungsgemäßen Glasgegenstände haben sich dabei Schiebedruckbilder erwiesen. Ein solches Schiebedruckbild besteht aus einer Dekorträgerschicht, z. B. Papier, das mit einer Gleitschicht versehen ist, wobei das Dekorbild aus Glasemailfarben bzw. Edelmetallen besteht und durch eine Lackschicht abgedeckt ist.

Eine Verfahrensvariante besteht darin, daß man perlenschnurartig angeordnete Luftbläschen zwischen den beiden Glasschichten erzeugt, indem man eine gasbildende Komponente im Schiebedruckbild nur zum Teil vor dem Überstechen mit der zweiten Glasschicht entfernt. Ferner kann für eine der beiden Glasschichten ein Farbglas verwendet werden.

Durch das erfindungsgemäße Verfahren lassen sich eine Reihe effektvoller Glasdekorationen erzielen, wie sie beispielsweise bei Trinkgläsern und Geschenkartikeln erwünscht sind und die insbesondere in größeren Stückzahlen hergestellt werden sollen. Ein Vorteil der erfindungsgemäßen Maßnahme ist auch darin zu sehen, daß sich das Dekor zwischen zwei Glasschichten befindet, wobei die Gefahr der Abgabe toxischer Farbstoffe absolut vermieden wird. Erfindungsgemäß wird ferner der Vorteil erreicht, daß ein Einbrennen der Farbkörper oder der Metalle nicht notwendig ist, so daß Energiekosten als auch die Kosten für den Einbrennofen eingespart werden. Ein weiterer Vorteil der Erfindung ergibt sich auch daraus, daß bei der Übertragung des großflächigen Dekors auf die zylinderische Fläche und den später stark gewölbten Gegenständen, wie zum Beispiel bauchigen Vasen, auch qualitativ hochwertige Dekore sachgemäß aufgebracht werden. Auch die Durchführung des Verfahrens ist an sich durch das Überstechen mit der zweiten Glasschicht verblüffend einfach, da bei Einhaltung der Wiedererwärmungstemperatur des Glaskülbels die Dekore weder beschädigt noch andere Fehler entstehen. Dabei beruht die Wirkung einerseits auf den unterschiedlich verwendeten Materialien wie Farbkörper und Metalle als auch durch die erzeugten Glasbläschen in der Zwischenschicht. Es können somit aufgrund des erfindungsgemäßen Verfahrens hinsichtlich der Farbigkeit und der Struktur des Glases neue ästhetische Effekte erzielt werden. In diesem Zusammenhang sei auch noch bemerkt, daß man durch spezielle Formgebungsmethoden auch reliefartige Oberflächen am fertig geblasenen Gegenstand erzielen kann, so daß man weitere Dekorationsvariationen erhält. Insbesondere lassen sich aber besonders komplizierte Motive sehr gut mit Hilfe des Schiebedruckbildes aufbringen.

Weitere Einzelheiten und vorteilhafte Weiterbildungen des Verfahrens nach der Erfindung ergeben sich aus der folgenden Ausführung gemäß Beispiel:

Vorzugsweise wird bei der Durchführung des erfindungsgemäßen Verfahrens, z. B. zur Herstellung einer bauchigen Vase oder Gefäßes, zunächst mit Hilfe einer Glasmacherpfeife aus dem Ofen ein Posten Glas entnommen und in einer Vorform zu einem zylinderförmigen Külbel geblasen. Die Temperatur des Kristall- bzw. Bleiglases beträgt dabei etwa 1250 bis 1400 °C. Das danach auf Raumtemperatur abgekühlte Külbel wird gereinigt und anschließend wird auf die spätere innere Glasoberfläche ein Schiebedruckbild als Farbdekor aufgebracht. Dies geschieht nach den bekannten Verfahrensschritten, wie sie aus der Dekortechnik in der Geschirrbranche bekannt sind. Dabei kann die Fläche für den Farbdruck uneben oder unregelmäßig sein. Für einen gleichmäßigen Farbhintergrund kann man auch ein Farbglas verwenden. Das Schiebedruckbild in Form von Motiven oder Dekoren kann man sowohl im Flachdruckverfahren wie auch im Siebdruckverfahren erhalten. Auf jedem Fall sind aber die Bilder für den Schiebedruck, gleichgültig ob im Flach- oder im Siebdruckverfahren hergestellt, mit einer Lackmaske versehen. Das Bild wird dabei auf ein Papier gedruckt, das mit einer gummiartigen und wasserablösbaren Schicht versehen ist, und nach dem Eintrocknen mit der bereits oben erwähnten Lackmaske bedeckt. Beim Aufbringen wird das Schiebedruckbild in Wasser getaucht, wodurch unter dem Einfluß des Wassers sich die gummiähnliche Schicht zwischen Trägerpapier und eigentlichem Bild löst und somit ein Aufschieben des Bildes auf die Glasoberfläche ermöglicht. Das Schiebedruckbild eignet sich insbesondere für Dekorationen mit großflächigen Motiven, wobei ein solcher Druck heute nicht nur mit Glasemailfarben, sondern auch Edelmetalle aufweist, wie zum Beispiel Gold. Es versteht sich von selbst, daß die Edelmetalle nur örtlich begrenzt und die Emailfarben vorzugsweise großflächig aufgetragen werden. Dabei ist festzustellen, daß das übliche Einbrennen der keramischen Farben bzw. Metalle auf dem Glas nicht in der üblichen Weise erfolgt und somit ein anderes Verfahren vorliegt, wie es sonst mit den Abzieh- und Schiebedrucken in der Porzellanindustrie angewendet wird. Danach wird das dekorierte Glaskülbel kurzfristig auf eine Temperatur von 560 °C erhitzt und mit einer äußeren Glasschicht überstochen. Beide Glasschichten befinden sich dann in einem zähplastischen Zustand und erhalten durch ein verstärktes Einblasen in eine Fertigform die endgültige Glasform. Holzformen bewähren sich heutzutage noch für Kristallglas am besten, weil bei ihnen der Glanz des Glases am schönsten erhalten bleibt. Natürlich haben solche Holzformen den Nachteil, daß sie sich abnützen. Sie brennen gewissermaßen aus, so daß die darin geblasenen Gegenstände nach einiger Zeit nach der Benutzung nicht mehr die gewünschte Größe bekommen; deshalb nimmt man lieber Metallformen. Den idealsten Oberflächenglanz erhält man aber durch das freie Aufblasen an der Luft. Dabei wird diese Technik aber nur selten angewandt. Nach dem Erstarren und Abkühlen des Glasgegenstandes können noch notwendige Schleif- und äußere Dekorarbeiten, wie zum Beispiel Glasätzen, durchgeführt werden.

Erfindungsgemäß wird der Farbdruck, der mechanisch auf das Grundglas fixiert ist, durch ein zweites Schichtglas bedeckt, so daß auf diese Weise zwischen zwei Glasschichten das Dekor zum liegen kommt. Nach dem Aufbringen der zweiten Glasschicht und dem weiteren Aufblasen des Glaskülbels erhält man, je nach Gegenstand, wie zylinderförmige Vase oder kugelförmige Dose, etwas geweitetes oder gestrecktes Dekor. Gleichzeitig findet aber durch den Druck und die Temperatur ein Laminierungsprozeß statt, so daß man später am fertigen Glasgegenstand keine Grenzschichten mehr erkennen kann. Die perlenschnurartig angeordneten Luftbläschen entlang der Dekorlinie ergeben sich, indem man eine gasbildende Komponente, z. B. Metallverbindungen, auf das Schiebebild mit aufdruckt oder die organischen Bestandteile des Schiebedruckes vor dem Überstechen nicht genügend abbrennt.

Patentansprüche

1. Verfahren zum Herstellen eines Farbdekores in einem Glas, insbesondere von Hohlglasgegenständen, die aus Kristall- oder Bleiglas bestehen, dadurch gekennzeichnet, daß zunächst in einer Vorform ein Grundglas, am besten ein zylinderförmiger Glaskülbel, geblasen wird, auf dem nach dem Abkühlen auf Raumtemperatur ein Farbdruck mit mehrfarbigen komplizierten Motiven aufgebracht wird, und das nach Erwärmung auf 500 bis 580 $^o$C mit einer zweiten Glasschicht als Mantelglas überstochen wird, wobei anschließend das so dekorierte Hohlglas frei oder in einer weiteren Form ausgeblasen wird.

2. Verfahren zum Herstellen eines Farbdekores in einem Glas nach Anspruch 1, dadurch gekennzeichnet, daß für den Farbdruck ein Schiebedruckbild verwendet wird.

3. Verfahren zum Herstellen eines Farbdekores in einem Glas nach Anspruch 2, dadurch gekennzeichnet, daß perlenschnurartig angeordnete Luftbläschen erzeugt werden, indem eine gasbildende Komponente im Schiebedruckbild nur zum Teil vor dem Überstechen mit der zweiten Glasschicht entfernt wird.

4. Verfahren nach Anspruch 1, dadurch gekennzeichnet, daß für eine der beiden Glasschichten ein Farbglas verwendet wird.

5. Schiebedruckbild nach Anspruch 2, dadurch gekennzeichnet, daß die Dekorträgerschicht Papier ist, die mit einer Gleitschicht versehen ist, das Dekorbild aus Emailfarben bzw. Edelmetallen besteht und abschließend durch eine Lackmaske abgedeckt ist.

Europäisches
Patentamt

**EUROPÄISCHER RECHERCHENBERICHT**

0086242

EP 82 10 1041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 086 407 (HESSEN GLASWERKE) <br> * das ganze Dokument * | 1,4 | C 03 B 9/06 <br> B 44 C 1/16 |
| | --- | | |
| X | US-A-1 816 045 (HALEY) <br> * das ganze Dokument * | 1,3,4 | |
| | --- | | |
| A | US-A-2 419 918 (SCHEETZ) <br> * Anspruch 5; Figuren 1-10 * | 1 | |
| | --- | | |
| A | US-A-2 734 840 (KANE) <br> * Anspruch 7; Figuren 1-3 * | 1 | |
| | ----- | | |

| RECHERCHIERTE SACHGEBIETE (Int. Cl. ³) |
|---|
| C 03 B 9/00 <br> B 44 C 1/16 |

Der vorliegende Recherchenbericht wurde für alle Patentansprüche erstellt.

| Recherchenort | Abschlußdatum der Recherche | Prüfer |
|---|---|---|
| DEN HAAG | 08-10-1982 | VAN DEN BOSSCHE W.L. |